(19)

Europäisches
Patentamt
European
Patent Office
Office européen
des brevets

(11) **EP 3 333 777 A1**

(12) **EUROPEAN PATENT APPLICATION**

(43) Date of publication:
**13.06.2018 Bulletin 2018/24**

(51) Int Cl.:
*G06K 19/07* (2006.01)          *H02J 50/05* (2016.01)

(21) Application number: **16306627.7**

(22) Date of filing: **06.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **THOMSON Licensing
92130 Issy-les-Moulineaux (FR)**

(72) Inventors:
• **KUMAR, Rupesh
35576 Cesson-Sévigné Cedex (FR)**

• **SADIQ, Mohammad
35576 Cesson-Sévigné Cedex (FR)**
• **LOUZIR, Ali
35576 Cesson-Sévigné Cedex (FR)**
• **LE NAOUR, Jean-Yves
35576 Cesson-Sévigné Cedex (FR)**

(74) Representative: **Huchet, Anne
TECHNICOLOR
1-5, rue Jeanne d'Arc
92130 Issy-les-Moulineaux (FR)**

(54) **METHOD AND APPARATUS FOR HARVESTING AN ENERGY FROM A POWER CORD**

(57)     A method for harvesting an energy from a power cord (10, 12) is disclosed. The method comprises mounting two electrodes (30A, 31A, 30B, 31B) around the power cord, wherein the electrodes comprise a first conductive part (300) being partially cylindrical around an axis, and a plurality of spikes (301, 302, 311, 312), originating from the first conductive part (300), directed towards the axis, and inserted in an insulating envelope (20, 211, 221) of the power cord, so as to increase the capacitive coupling to the wires (210, 220) inside the power cord and to increase the amount of harvested energy by the two electrodes. A device such as for example a wireless RFID tag (5A, 5B, 5C) is advantageously powered by the energy harvested by the two electrodes.

**Figure 3b**

**Description**

1. TECHNICAL FIELD

The technical field of the disclosed method and apparatus is related to energy harvesting for powering devices such as sensors embedded in RFID tags.

2. BACKGROUND ART

Smart home and smart building applications generally rely on deploying battery powered sensors in the home or building environment so as to measure and collect data in order to provide enhanced services. A huge variety of such sensors emerge as part of the Internet of Things trend, and include measurement of for example temperature, pressure, humidity, or magnetic field. Such sensors further include for example presence detection or door/window opening status detection. There are known methods where such a battery powered sensor is coupled to a RFID tag that is able to report a value measured by the sensor towards a RFID interrogator. A first drawback of battery powered sensors is the cost of the battery which impacts the cost of the whole solution. A second drawback is the required maintenance of the system: batteries need to be monitored and regularly changed. These drawbacks represent significant barriers in the deployment of low cost and ease of use sensors dedicated to smart home applications. New methods and sensor devices are desired for measuring and reporting values without requiring the sensor device to be battery powered.

3. SUMMARY

A salient idea of the present principles is to harvest an energy from a power cord, by mounting two electrodes around the power cord, wherein the electrodes comprise a first conductive part being partially cylindrical around an axis, and a plurality of spikes, originating from the first conductive part, directed towards the axis, and inserted in an insulating envelope of the power cord, so as to increase the capacitive coupling to the wires inside the power cord and to increase the amount of harvested energy by the two electrodes. A device such as for example a wireless RFID tag is advantageously powered by the energy harvested by the two electrodes.

To that end a device adapted to harvest an energy from a power cord is disclosed. The device comprises at least two electrodes mounted around the power cord, wherein at least one of the two electrodes comprises a plurality of spikes inserted in an insulating envelope of the power cord.

According to a particularly advantageous variant, the at least one of the two electrodes comprises a first conductive part being partially cylindrical around an axis, the spikes originating from the first conductive part and being directed towards the axis.

According to another particularly advantageous variant, at least one spike is a blade of material along the axis.

According to another particularly advantageous variant, the spikes of the plurality of spikes have a same form.

According to another particularly advantageous variant, the spikes of the plurality of spikes are regularly distributed around the first conductive part.

According to another particularly advantageous variant,

- each spike occupies a surface of the first conductive part, the surface corresponding to a first angle of the partially cylindrical first conductive part;
- an interval between two consecutive spikes corresponds to a second angle of the partially cylindrical first conductive part, and
- a ratio of the first angle over a sum of the first angle and the second angle is between 1/2 and 2/3.

According to another particularly advantageous variant, the spikes are conductive, with a length being strictly smaller than a thickness of the insulating envelope.

According to another particularly advantageous variant, the spikes are of a dielectric material and inserted in the insulating envelope up to a conductive part of the power cord.

According to another particularly advantageous variant, the device is powered by the harvested energy.

According to another particularly advantageous variant, the device is powered by the harvested energy.

According to another particularly advantageous variant, the device is a wireless tag.

According to another particularly advantageous variant, the device is a RFID tag.

According to another particularly advantageous variant, the device further comprises a capacitor adapted to store the harvested energy.

According to another particularly advantageous variant, the device further comprises a sensor.

According to another particularly advantageous variant, the device further comprises an impulse detector.

In a second aspect a method for powering a device is also disclosed. The method comprises:

- mounting two electrodes around a power cord, wherein at least one of the two electrodes comprises a plurality of spikes inserted in an insulating envelope of the power cord;
- powering the device with an energy harvested from the power cord by the two electrodes.

While not explicitly described, the present embodiments may be employed in any combination or sub-combination. For example, the present principles are not limited to the described variants, and any arrangement of variants and embodiments can be used. Moreover the present principles are not limited to the described forms of spikes examples. The present principles are not further limited to the described positioning of spikes on the first conductive part and are applicable to any other positioning of spikes. The present principles are not further limited to a RFI D tag and any other type of tag is applicable to the disclosed principles.
Besides, any characteristic, variant or embodiment described for the device is compatible with a method for powering the device.

4. BRIEF DESCRIPTION OF THE DRAWINGS

- **Figure 1** illustrates an example of harvesting an energy from a power cord according to a known method;
- **Figures 2a** depicts an example of a cross-section view of the power cord of Figure 1;
- **Figures 2b** shows a modelling of the power cord of Figure 2a in an electrical circuit according to a specific and non-limiting embodiment of the disclosed principles;
- **Figure 2c** shows an equivalent electrical circuit of an electrical field energy harvester according to a specific and non-limiting embodiment of the disclosed principles;
- **Figure 2d** illustrates an application of the Thevenin Theorem to the electrical circuit of Figure 2c;
- **Figure 2e** shows plots of amounts of harvested energy evolution over time according to a specific and non-limiting embodiment of the disclosed principles;
- **Figure 3a and 3b** respectively describe a cross-section view of two electrodes adapted to harvest an energy from a power cord according to two specific and non-limiting embodiments of the present principles;
- **Figure 4a and 4b** illustrate two further specific and non-limitative embodiments of the disclosed principles;
- **Figure 5a, 5b and 5c** depict three RFID tag devices adapted to harvest an energy from a power cord according to respectively three specific and non-limiting embodiments of the disclosed principles;
- **Figure 6** describes a method for powering a device from energy harvested from a power cord according to a specific and non-limiting embodiment of the disclosed principles.

5. DESCRIPTION OF EMBODIMENTS

A possible approach to deploy battery less sensor devices is to harvest an energy, for example from a power cord. Indeed power cords are highly available in homes and buildings, so that relying on a power cord availability to deploy a sensing device does not represent a strong deployment constraint. Some methods are known to harvest an energy from power cords. Most of energy harvesters from power cords use magnetic coupling. This technique requires current flowing in the power cord which represents some limitations. Indeed the amount of energy harvested strongly depends on the amount of power being consumed by devices connected to the power cord. Some methods recently emerged for harvesting energy from power cords by using the electrical field. Such electric field energy harvesting techniques do not require current to flow in the power cord. The harvested energy is always available but remains relatively limited.

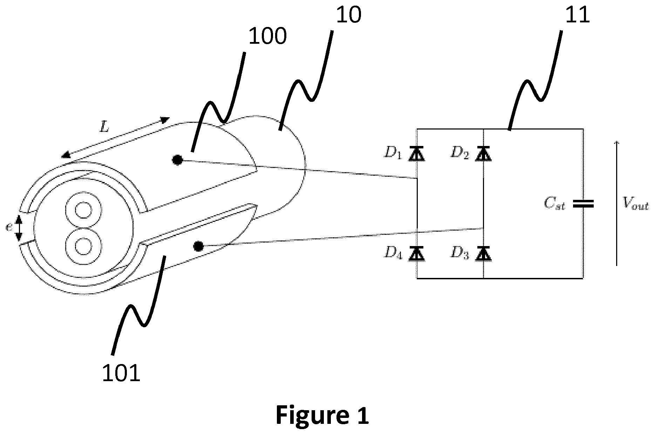

**Figure 1** represents an example of an electric field energy harvesting technique. The energy is harvested from two partially cylindrical electrodes 100 and 101 mounted around a power cord 10 over a length L and separated by a distance e. The energy harvested is stored in a storage module for example represented by an electrical diagram 11 comprising four diodes $D_1$, $D_2$, $D_3$, $D_4$ and a storage capacitor $C_{st}$. The amount of harvested energy for a given time duration, is directly related to the length L of the electrodes 100, 101 and remains limited for lengths below ten to fifteen centimeters.

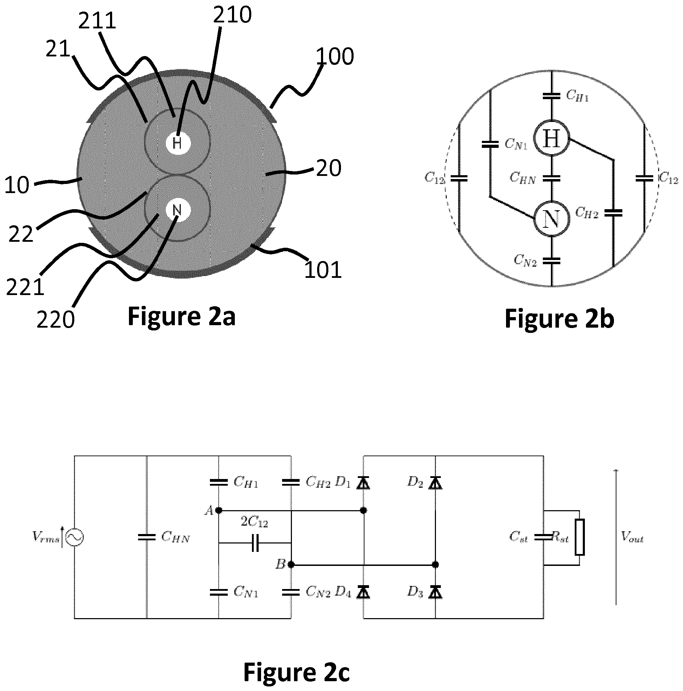

**Figure 2a** shows an example of a cross-section view of a power cord 10 with the two partially cylindrical electrodes 100, 101, supposed of length L, and **Figure 2b** shows the corresponding modeling in an electrical circuit. According to a specific and non-limiting embodiment, the power cord 10 comprises a hot wire 21 and a neutral wire 22, embedded into a main insulating envelope 20. The hot wire 21 comprises a conducting part 210, itself embedded into an individual insulating envelope 211. Similarly the neutral wire 22 comprises a conducting part 220, itself embedded into an individual insulating envelope 221. The two electrodes 100, 101 are capacitively coupled to the hot 21 and neutral 22 wires and an energy is harvested from the leakage electric field which generates a current corresponding to the displacement current according to Maxwell's equation. This current is used to charge a storage capacitor $C_{st}$ through a rectifying circuit using the diodes $D_1$, $D_2$, $D_3$, $D_4$ as shown in **Figure 1.** In **Figure 2b,** the coupling capacitors to the hot wire 21 are denoted $C_{H1}$ for the electrode 100 and $C_{H2}$ for the electrode 101. By the same way, the coupling capacitors to the neutral wire 22 are denoted $C_{N1}$ for the electrode 100 and $C_{N2}$ for the electrode 101. The coupling capacitor between the hot 21 and the neutral 22 wires is denoted $C_{HN}$. Finally $C_{12}$, denotes the direct coupling between both electrodes 100 and 101. In case the electrodes 100, 101 are symmetrical, the coupling capacitors $C_{H1}$ and $C_{N2}$ are of a same value ($C_{H1}=C_{N2}$), so as for the coupling capacitors $C_{H2}$ and $C_{N1}$ ($C_{H2}=C_{N1}$). In case the electrodes 100, 101 are of different size and/or form, the coupling capacitors have different values. Indeed, the values of these coupling capacitors depend on the exact geometry of the considered power cord 10 and the configuration of the electrodes 100, 101.

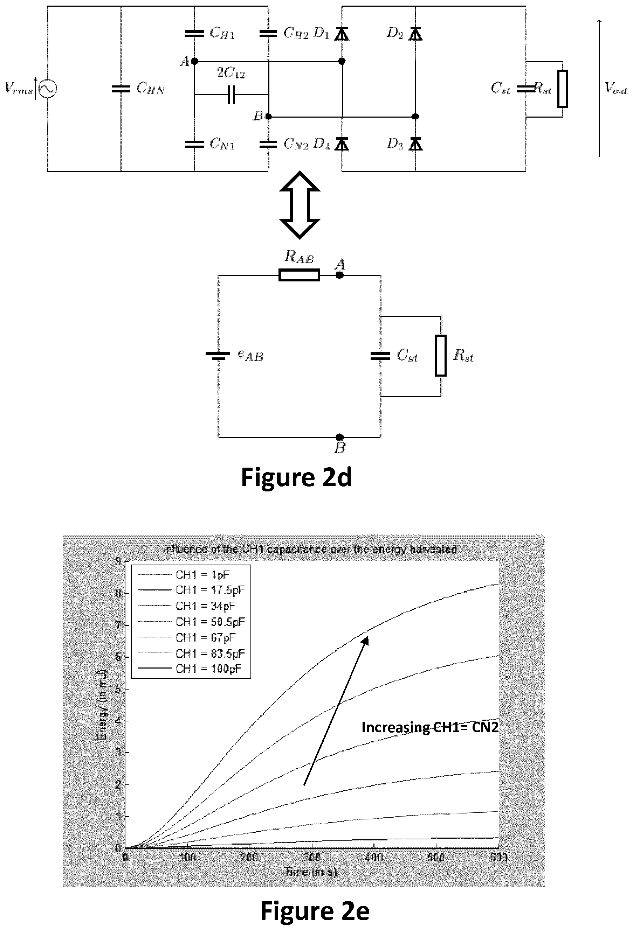

**Figure 2c** shows an equivalent electrical circuit of an electrical field energy harvester, merging the modelling of figures 1 and 2b. In figure 2c, by applying the Thevenin theorem illustrated in Figure 2d, the voltage at the edges of the storage capacitor $C_{st}$, denoted $V_{out}$, is calculated as:

$$V_{out} = Ge_{AB}\left(1 - \exp\left(-\frac{t}{\tau}\right)\right),$$

where:

$$G = \frac{R_{st}}{R_{st}+R_{AB}} \quad ; \quad R_{AB} = \frac{1}{2\pi f\, C_{eq}} \quad ; \quad C_{eq} = \frac{(C_{H1}+C_{N1})(C_{H2}+C_{N2})}{(C_{H1}+C_{N1}+C_{H2}+C_{N2})} + 2C_{12}$$

- $R_{st}$ represents the leakage resistance of the storage capacitor;

- $eAB = A * V_{rms}; \quad A = \dfrac{\frac{x-\frac{1}{x}}{x+1}}{1+\frac{1}{x}+\frac{2C_{12}}{C_{H1}}\left[x+1+\frac{1}{x+1}-\frac{x^2}{x+1}\right]} \quad ; \quad x = \dfrac{C_{H1}}{C_{N1}}$

- $\tau = \dfrac{R_{st}R_{AB}}{R_{st}+R_{AB}}$

**Figure 2d** shows an application of the Thevenin Theorem, by replacing the passive circuit at the left side of terminals A-B, by the equivalent voltage source $e_{AB}$ and resistance $R_{AB}$. In this calculation, the resistances of the diodes of the rectifier (in serial with $R_{AB}$) are neglected, following a hypothesis of perfect diode. Therefore, for a given storage capacitor $C_{st}$, the harvested energy $E_h$ is given by:

$$E_h = \frac{1}{2}C_{st}V_{out}^2$$

**Figure 2e** shows examples of harvested energy evolution over time calculated using the above formulas for values of coupling capacitors $C_{H1}=C_{N2}$, varying from 1pF to 100 pF. For these calculations the storage capacitor $C_{st}$ value is chosen equal to $22\mu F$. It appears clearly from Figure 2e, that the amount of harvested energy is directly related to the values of the coupling capacitors $C_{H1}$ and $C_{N2}$. The disclosed principles describe several specific and non-limiting embodiments where the geometry of the electrodes is advantageously adapted to increase the value of the coupling capacitors, so as to increase the amount of harvested energy.

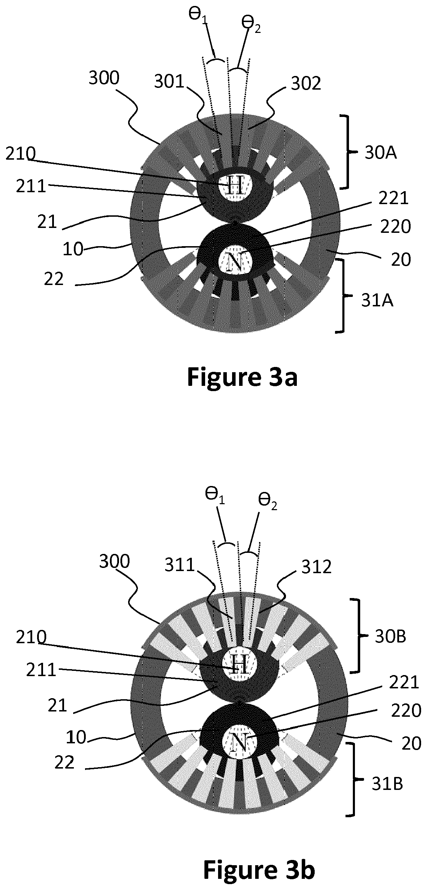

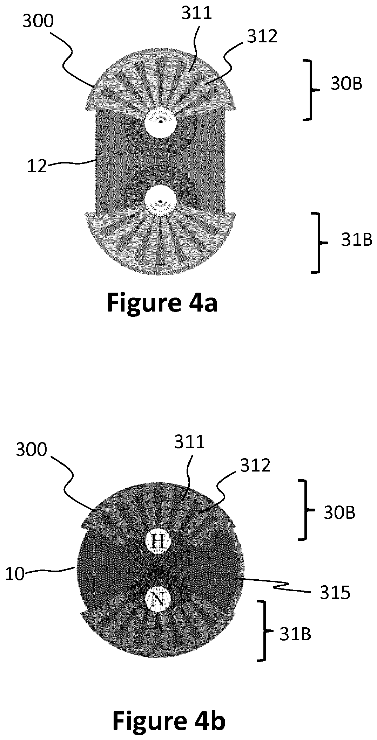

**Figure 3a** and **Figure 3b** illustrate a cross section of a device adapted to harvest an energy from a power cord 10 according to two specific and non-limiting embodiments of the disclosed principles. The device comprises at least two distinct electrodes 30A, 31 A, 30B, 31 B mounted around the power cord 10, and being electrically disconnected between each other. The figures 3a and 3b show a pair 30A-31 A of two electrodes (for figure 3a) and a pair 30B-31 B of two electrodes (for figure 3b), respectively mounted around the power cord 10. For the sake of clarity, the principles will be described with one pair of two electrodes 30A-31 A, 30B-31 B, but any number of pair of electrodes mounted around the power cord is compatible with the disclosed principles. In a first variant, at least one electrode 30A, 30B of a pair 30A-31A, 30B-31 B of electrodes comprises a plurality of spikes 301, 302, 311, 312 inserted in an insulating envelope 20, 211 of the power cord 10. In a second variant both electrodes 30A, 31A of a pair 30A-31A, are identical and comprise a same plurality of spikes, of a similar geometry. A similar geometry of both electrodes 30A, 31 A advantageously improves the capacitive coupling to the conductive parts 210, 220 of the wires 21 and 22.. The power cord 10 illustrated in figures 1, 2a and 3a-3b comprises two types of insulated envelopes: an individual insulating envelope 211, 221 around each of the conductive part 210, 211 of each wire 21, 22, and a main insulating envelope 20 around both isolated wires 21, 22. But other types of insulating envelopes, such as for example a single unique insulating envelope are compatible with the disclosed principles. At least one electrode 30A, 30B of a pair of electrodes, (or each electrode 30A, 31 A, 30B-31 B, of a pair of electrodes depending on the variant) comprises a first conductive part 300 being partially cylindrical around an axis. For example the first conductive part 300 is metallic. The term conductive implies a high level of electrical conductivity. The form of the first conductive part 300 is typically closed to a semi-cylinder, but with an angle strictly less than 180°as illustrated in the figures 3a, 3b, 4a, 4b. Indeed two electrodes with a first conductive part 300 of an angle of 180°would be in short circuit w hen mounted on the power cord. Any partially cylindrical form with an angle less than 180° is compatible with the disclosed principles. The axis of the partially cylindrical conductive part 300 of the electrode 30A, 31 A, 30B, 31 B is longitudinal to the electrode 30A, 31 A, 30B, 31 B and perpendicular to the cross section plan of figures 3a, and 3b. The electrodes 30A, 31 A, 30B, 31 B are longitudinally mounted on the power cord 10. In other words the axis of the electrode partial cylinder is also the axis of the power cord 10. According to this specific and non-limiting embodiment, the plurality of spikes 301, 302, 311, 312 of the electrode 30A, 31 A, 30B, 31 B originate from the partially cylindrical conductive part 300 of the electrode 30A, 31 A, 30B, 31 B and are directed towards the axis of the partially cylindrical conductive part 300.

In an advantageous variant, at least one spike 301, 302, 311, 312 is a contiguous blade of a same material along the axis of the partially cylindrical conductive part 300. In another variant (not represented), the spikes are conical, and directed towards the axis in the cross section view. In that variant the spikes are a discontinuous blade of a same material along the axis of the partially cylindrical conductive part 300. For the sake of clarity all the spikes 301, 302, 311, 312 of the electrodes 30A, 31 A, 30B, 31 B are represented with a same form and regularly distributed around the electrodes 30A, 31 A, 30B, 31 B. But any arrangement and geometry of the spikes on the first conductive part 300, adapted to increase the capacitive coupling of the electrodes 30A, 31 A, 30B, 31 B is compatible with the disclosed principles.

In an advantageous variant, wherein the spikes 301, 302, 311, 312 are regularly distributed around the first conductive part 300, each spike 301, 302, 311,312 occupies a surface of the first conductive part 300 corresponding to a first angle $\theta_1$ of the first partially cylindrical conductive part 300. An interval between two consecutive spikes 301, 302 further corresponds to a second angle $\theta_2$ of the first partially cylindrical conductive part 300. A filling factor $\alpha$ is defined

as a ratio of the second angle $\theta_2$ over a sum of the first angle $\theta_1$ and the second angle $\theta_2$ : $\alpha = \dfrac{\theta_2}{\theta_1 + \theta_2}$.

## CONDUCTIVE ELECTRODES EMBODIMENT

According to a specific and non-limiting embodiment of the disclosed principles illustrated in Figure 3a, the spikes 301, 302 of the electrodes 30A, 31 A, in any of the described variant above, are conductive. The spikes 301, 302 are for example made of a same conductive material as the first partially cylindrical part 300 of the electrode 30A. For example, the spikes 301, 302 are also metallic. According to this specific embodiment, the conductive spikes 301, 302 have a length strictly smaller than a thickness of the overall insulating envelope 20, 211, 221 of the power cord 10. As the length of the spikes 301, 302 is *strictly* less than the thickness of the insulating envelope 20, 211, 221 of the power cord 10, the conductive spikes 301, 302 do not enter in contact with the conductive part 210, 220 or the wire 21, 22 so as to avoid an electrical short circuit of the electrode 30A, 31 A.

Considering *a* as the radius of the conductive part 210, 220, b the radius of the first partially cylindrical conductive part 300 of the electrode 30A, 31 A, and / a length of the spikes 301, 302 corresponding to their penetration depth in the insulating envelope 20, 211, 221, it can be demonstrated that the equivalent capacitance $C_{eq}$ induced between the internal conductive part 210, 220 of the wire 21, 22 of radius *a,* and the electrode 30A, 30B according to the disclosed principles could be written as:

$$C_{eq} = C_1 F_{increase}(\alpha, l)$$

Where :

C$_1$ is the capacitance induced between the internal conductive part 210, 220 of the wire 21, 22 and the electrode 30A, 31 A without any spike (I=0)

$$F_{increase}(\alpha, l) = (1 - \alpha) + \alpha \frac{\ln\left(\frac{b}{a}\right)}{\ln\left(\frac{b-l}{a}\right)} ; \qquad \alpha = \frac{\theta_2}{\theta_1 + \theta_2} : \text{"filling" factor.}$$

Fincrease represents the increase factor of the capacitance induced by the electrode 30A, 31 A (i.e. $C_{H1}$ or $C_{N2}$) expressed as function of its geometrical parameters $\alpha$ and l.

For a penetration of the conductor of 1.2mm, corresponding to a practical realization using for example a lamp power cord, it can be calculated that the capacitances are multiplied by 1, 2.5, 3 and 4 for $\alpha$ equals respectively to 0 (no penetration of the conductor), 1/2, 2/3 and 1.

Practically using two electrodes 30A, 31 A mounted around a lamp power cord according to the disclosed principles, with a spike length in the range of 1.2 mm and a filling factor in the range of 2/3, the harvested energy improvement approaches a factor of ten. In other words, the amount of harvested energy from conductive electrodes 30A, 31 A according to the described embodiment is multiplied by ten compared to the harvested power energy only partially cylindrical conductive electrodes 100, 101 without any spikes 301, 302.

## METALLO-DIELECTRIC ELECTRODES EMBODIMENT

According to another specific and non-limiting embodiment of the disclosed principles illustrated in Figure 3b, the spikes 311, 312 of the electrodes 30B, 31 B, in any of the described variant above, are made in a dielectric material. A dielectric material despite of a very low conductivity is not conductive in the sense of the disclosed principles. The dielectric spikes 311, 312 are fixed on the surface of the first conductive partially cylindrical part 300 of the electrode 30B. According to this specific embodiment, the dielectric spikes 311,312 have a length smaller than or equal to a thickness of the overall insulating envelope 20, 211, 221 of the power cord 10. Advantageously the dielectric spikes 311, 312 are inserted in the insulating envelope 20, 211, 221 of the power cord 10 up to the conductive part 210, 220 of the power cord 10. As the material of the spikes 311, 312 is dielectric, no electrical short circuit is created as the dielectric spikes 311, 312 enter in contact with the conductive part 210, 220 of the wire 21, 22.

Considering the same notations as for the conductive embodiment (*a, b, l*), and further considering $\varepsilon_{r1}$ as a permittivity of the insulating envelope 20, 211, 221 of the power cord 10 and $\varepsilon_{r2}$ a permittivity of the dielectric material of the spikes 311,312, it can be demonstrated that the equivalent capacitance $C_{eq}$ induced between the internal conductive part 210, 220 of the wire 21, 22 of radius *a*, and the electrode 30B, 31 B according to the disclosed principles could be written as:

$$C_{eq} = C_1 F_{increase}(\alpha, \varepsilon_{r1,} \varepsilon_{r2,})$$

with $C_1$ the capacitance induced between the internal conductive part 210, 220 of the wire 21, 22 and the electrode 30B, 31 B without any spike (I=0), $F_{increase}$ represents the factor of increase for fixed $\alpha$ and permittivity of the used material.

$$F_{increase}(\alpha, \varepsilon_{r1,} \varepsilon_{r2,}) = (1 - \alpha) + \alpha \frac{\varepsilon_{r2}}{\varepsilon_{r1}}$$

$$\alpha = \frac{\theta_2}{\theta_1 + \theta_2}$$

Practically, from the above formula it can be calculated that using two metallo-dielectric electrodes 30B, 31 B mounted around a lamp power cord according to the disclosed principles, with spikes 311, 312 of a length in the range of 1.4mm, made in a dielectric material of permittivity 8, and a filling factor in the range of 2/3, the harvested energy improvement approaches a factor of four. In other words, the amount of harvested energy from metallo-dielectric electrodes 30B, 31 B according to the described embodiment is multiplied by four compared to the harvested energy from only partially cylindrical conductive electrodes 100, 101 without any spike. Metallo-dielectic electrodes 30B, 31 B according to the disclosed principles are easier to install on power cords 10 than the electrodes 30A, 31A according to the conductive embodiment, as it does not matter whether the dielectric spikes 311, 312 enter in contact with a conductive part 210, 220 of the power cord. But the amount of energy harvested from the metallo-dielectric electrodes 30B, 31 B is smaller than an amount of energy harvested from electrodes 30A, 31 A according to the conductive embodiment in similar conditions.

**Figure 4a** and **Figure 4b** illustrate two further specific and non-limitative embodiments of the disclosed principles. **Figure 4a** represents a cross section of a power cord 12 of a different form, the section of the power cord 12 being ovoid and not fully circular. Figure 4a represents two metallo-dielectric electrodes 30B, 31 B mounted around the power cord 12, wherein each of the metallo-dielectric electrodes 30B, 31 B comprises a partially cylindrical first conductive part 300, and a plurality of spikes 311, 312 made of a dielectric material and inserted in an insulating envelope of the power cord 12 up to a conductive part of the power cord. Similarly, the disclosed principles are also applicable to conductive electrodes according to the conductive embodiment, wherein the conductive electrodes are mounted around an ovoid power cord (not represented). **Figure 4b** represents yet another embodiment of two metallo-dielectric electrodes 30B, 31 B mounted around a power cord 10, wherein both electrodes are further connected together by a piece of dielectric material 315. Such a configuration wherein the two electrodes 30B-31 B constitute a single dielectric piece of material being partially metalized is advantageous as it easier to manufacture and to deploy on power cords.

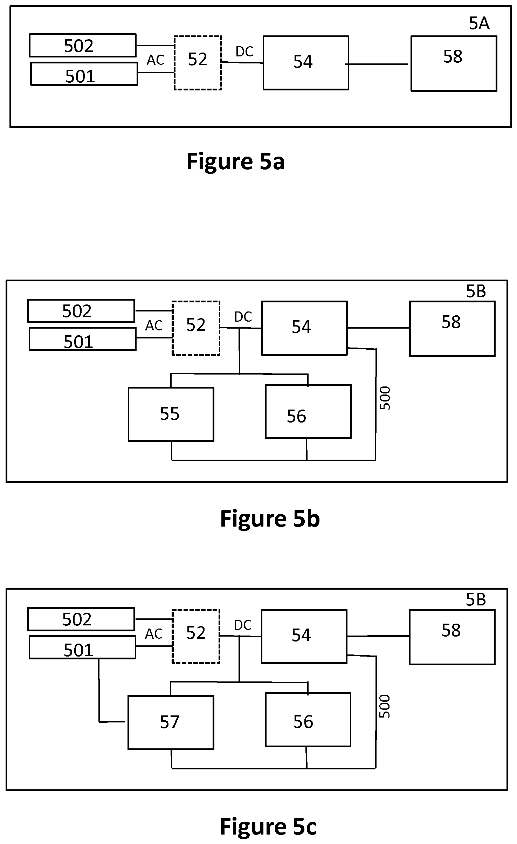

**Figure 5a** depicts a wireless tag device 5A adapted to harvest an energy from a power cord according to a specific and non-limiting embodiment of the disclosed principles. The wireless tag device is for example a RFID tag device. For the sake of clarity the tag device is described as a RFID tag device but any other kind of wireless tag device such as for example a Bluetooth tag is compatible with the disclosed principles. The RFID (or Bluetooth) tag device 5A comprises a RFID (or Bluetooth) integrated circuit 54 connected to an antenna 58. The RFID integrated circuit 54 and the antenna 58 constitute a wireless network interface for sending / receiving a modulated RF carrier to / from a wireless interrogator. The wireless network interface belongs to a set comprising:

- A UHF RFID Air interface for the 860 MHz-960 MHz band, following the national regulations;
- A UHF RFID Air interface for the 433 MHz band following the national regulations;
- A RFID Air interface for the ISM 2.4 GHz band following the national regulations;
- A RFID Air interface for the 5.2 - 5.8 GHz band following the national regulations.

More generally any wireless network interface allowing to send / receive information to / from one or more wireless tag devices is compatible with the disclosed principles.

The RFID integrated circuit 54 is configured to receive its operating energy from a modulated RF carrier captured by the antenna 58, and to send a backscattered reply. The RFID integrated circuit 54 is also adapted to receive a further energy for example harvested by at least two electrodes 501, 502 mounted around a power cord according to any variant and/or embodiment of the disclosed principles. A possible example of such RFID integrated circuit 54 that can be further powered by another source or energy than the RF carrier reception, are the SL3S4011 from NXP, or the Monza X Chip from Impjin. Any RFID integrated circuit 54 that can be powered by another source or energy than the RF carrier reception is compatible with the disclosed principles. Optionally an energy storing module 52 stores an energy being harvested by the two electrodes 501, 502 mounted around the power cord, and not used by the integrated circuit 54. The energy storage module for example comprises a storage capacitor and a full wave rectifier comprising four diodes adapted to convert an analog current AC input providing from the electrodes 501, 502 into a direct current DC output. A possible value of the storage capacitor is $22\mu F$, and the four diodes are for example small signal fast switching diodes 1 N4148 from Vishay Semiconductors. An example of energy storing module is also illustrated in figure 1 as an electrical circuit 11.

Powering a passive RFID tag device 5A with an energy harvested from a power cord is advantageous as it allows to extend the coverage of the RFID system: the RFID tag uses the harvested energy from the power cord in addition to the energy received from the reception of the modulated RF carrier by the antenna, so as to send back the backscattered reply. Typically by powering a SL3S4011/4021 integrated circuit from NXP using the capacitor stored energy, the read sensitivity is improved by 5 dB (from -18 dBm to -23 dBm) while the write sensitivity is improved by up to 12 dB (from -11 dBm to -23 dBm). That translates in terms of range by doubling the read range and by multiplying the write range by a factor of 4.

**Figure 5b** depicts a wireless tag device 5B adapted to harvest an energy from a power cord according to another specific and non-limiting embodiment of the disclosed principles. The wireless tag device 5B, for example a RFID tag device comprises the same elements as the wireless tag device 5A, i.e. a RFID integrated circuit 54, an antenna 58, at least two electrodes 501, 502 and an optional energy storage module 52. In addition, and according to this specific and non-limiting embodiment, the RFID tag device 5B further comprises a sensing 55 and computing 56 hardware being powered with the harvested energy. Powering such an active RFID tag device 5B with an energy harvested from a power cord is advantageous as it enables the deployment of battery less sensing RFID tag devices in smart home or building environments. The RFID tag device 5B for example comprises an ultra-low power microcontroller 56. The RFID tag device further comprises a sensor 55 configured to measure a variety of data, such as for example and without limitation an ambient temperature, an atmospheric pressure, a local magnetic field, .... The sensor 55, the microcontroller 56 and the RFID integrated circuit 54 are interconnected by a bus 500, such as for example an I2C interface. The I2C interface is a two-wire interface supported by many embedded systems, such as computers or electronic devices. The I2C functionality enables writing/reading information in a memory of the RFID tag device 5B, such as a data measured by the sensor 55, and then made available to a RFID interrogator via the RFID integrated circuit 54. According to different variants, the memory is a standalone memory (not represented) or included in the sensor 55, or in the microcontroller 56 or in the RFID integrated circuit 54.

**Figure 5c** depicts a wireless tag device 5C adapted to harvest an energy according to yet another specific and non-limiting embodiment of the disclosed principles. The wireless tag device 5C is mounted around a power cord, powering a specific device (not represented) such as a personal computer, a TV set, or any kind a device that can be switched on and off. In that example, the wireless tag device 5C is further adapted to detect that the specific device being powered by the power cord is being switched on or switched off. Detecting that an external device is being switched on or off may be interesting for various data mining or Internet of Things applications. To that end the wireless tag device 5C, for example a RFID tag device comprises the same elements as the wireless tag device 5B, i.e. a RFID integrated circuit 54, an antenna 58, at least two electrodes 501, 502, an optional energy storage module 52 and a micro-controller 56. The sensor 55 or device 5B is replaced in this embodiment by an impulse detector 57. In a variant (not represented), the impulse detector 57 is merged with the RFID integrated circuit 54 in a single integrated circuit. The microcontroller 56 is coupled in signal communication 500 to the impulse detector 57. The impulse detector 57, is operative to detect when the specific device being powered by the power cord, is being switched on or off. More precisely, the impulse detector 57 is operative to receive an impulse response from the electrodes 501, 502 mounted around the power cord. The impulse detector 57 is operative to provide one of a single alert signal and a plurality of alert signals for the micro-controller 56 in response to the impulse response. The impulse response includes one of a single impulse waveform and a plurality of impulse waveforms in a time period. The impulse detector 57 generates the single alert signal when the impulse response includes the single impulse waveform. The impulse detector 57 generates the plurality of alert signals when the impulse response includes respective ones of the plurality of impulse waveforms. The microcontroller 56 is operative to determine a nature of the impulse response. The nature is determined as a switch-ON response when the single alert signal is received. The nature is determined as a switch-OFF response when the plurality of alert signals are received. The microcontroller 56 and the impulse detector 57, are advantageously powered from energy harvested from the power cord according to any variant or embodiment of the disclosed principles.

In a first variant of any of the previously described embodiment, the wireless tag device 5A, 5B, 5C is a battery less device and is further powered only with the harvested energy, meaning that the wireless tag device 5A, 5B, 5C is powered from the harvested energy in addition to the energy received by the antenna from the RF carrier. In a second variant of any of the previously described embodiment, the wireless tag device 5A, 5B, 5C comprises a battery and is further powered also with the harvested energy. Powering the device comprising a battery with an energy harvested from a power cord is advantageous as it allows to preserve the battery and to extend its duration.

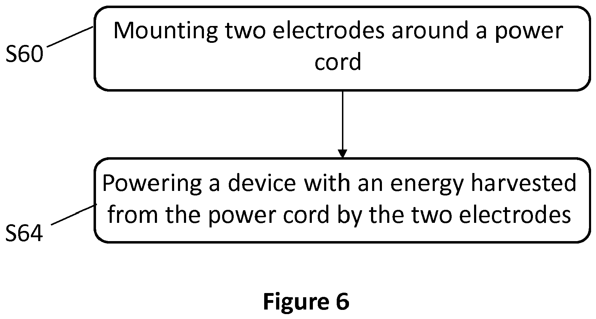

**Figure 6** describes a method for powering a device from an energy harvested from a power cord according to a specific and non-limiting embodiment of the disclosed principles.

In the step S60, at least two distinct electrodes are mounted around a power cord, wherein the two distinct electrodes are electrically disconnected and at least one of the two electrodes comprises a plurality of spikes inserted in an insulated envelope of the power cord, according to any variant and/or embodiment described above.

In the step S64, a device, such as for example a wireless RFID tag is powered with an energy harvested from the power cord by the at least two electrodes and according to any variant and/or embodiment described above.

**Claims**

1. A device (5A, 5B, 5C) adapted to harvest an energy from a power cord (10, 12), the device (5A, 5B, 5C) comprising at least two electrodes (30A, 31 A, 30B, 31 B) mounted around the power cord (10, 12), wherein at least one of the two electrodes (30A, 31 A, 30B, 31 B) comprises a plurality of spikes (301, 302, 311, 312) inserted in an insulating envelope (20, 211, 221) of the power cord (10, 12).

2. The device (5A, 5B, 5C) according to claim 1, wherein the at least one of the two electrodes (30A, 31 A, 30B, 31 B) comprises a first conductive part (300) being partially cylindrical around an axis, the spikes (301, 302, 311,312) originating from the first conductive part (300) and being directed towards the axis.

3. The device (5A, 5B, 5C) according to claim 2, wherein at least one spike (301, 302, 311, 312) is a blade of material along the axis.

4. The device (5A, 5B, 5C) according to any of claims 2 to 3, wherein the spikes (301, 302, 311,312) of the plurality of spikes have a same form.

5. The device (5A, 5B, 5C) according to any of claims 2 to 4, wherein the spikes (301, 302, 311,312) of the plurality of spikes are regularly distributed around the first conductive part (300).

6. The device (5A, 5B, 5C) according to claim 5, wherein:

EP 3 333 777 A1

- each spike (301, 302, 311, 312) occupies a surface of the first conductive part (300), the surface corresponding to a first angle ($\theta_1$) of the partially cylindrical first conductive part (300);
- an interval between two consecutive spikes corresponds to a second angle ($\theta_2$) of the partially cylindrical first conductive part (300), and
- a ratio of the first angle ($\theta_1$) over a sum of the first angle ($\theta_1$) and the second angle ($\theta_2$) is between 1/2 and 2/3.

7. The device (5A, 5B, 5C) according to any of claims 1 to 6, wherein the spikes (301, 302) are conductive, with a length being strictly smaller than a thickness of the insulating envelope (20, 211, 221).

8. The device (5A, 5B, 5C) according to any of claims 1 to 6, wherein the spikes (311, 312) are of a dielectric material and inserted in the insulating envelope (20, 211, 221) up to a conductive part of the power cord (10, 12).

9. The device (5A, 5B, 5C) according to any of claims 1 to 8, wherein the device (5A, 5B, 5C) is powered by the harvested energy.

10. The device (5A, 5B, 5C) according to any of claims 1 to 9, wherein the device (5A, 5B, 5C) is a wireless tag.

11. The device (5A, 5B, 5C) according to claim 10 wherein the device (5A, 5B, 5C) is a RFID tag.

12. The device (5A, 5B, 5C) according to any claims 1 to 11, further comprising a capacitor adapted to store the harvested energy.

13. The device (5A, 5B, 5C) according to any claims 1 to 12, further comprising a sensor (55).

14. The device (5A, 5B, 5C) according to any claims 1 to 12, further comprising an impulse detector (57).

15. A method for powering a device (5A, 5B, 5C), the method comprising:

- mounting two electrodes (30A, 31 A, 30B, 31 B) around a power cord (10,12), wherein at least one of the two electrodes (30A, 31A, 30B, 31 B) comprises a plurality of spikes (301, 302, 311, 312) inserted in an insulating envelope (20, 211, 221) of the power cord (10,12);
- powering the device (5A, 5B, 5C) with an energy harvested from the power cord (10, 12) by the two electrodes (30A, 31 A, 30B, 31 B).

**Figure 1**

**Figure 2a**

**Figure 2b**

**Figure 2c**

## Figure 2d

Influence of the CH1 capacitance over the energy harvested

CH1 = 1pF
CH1 = 17.5pF
CH1 = 34pF
CH1 = 50.5pF
CH1 = 67pF
CH1 = 83.5pF
CH1 = 100pF

Increasing CH1= CN2

## Figure 2e

**Figure 3a**

**Figure 3b**

300  311  312
30B

12

31B

**Figure 4a**

300  311  312
30B

10

315

31B

**Figure 4b**

**Figure 5a**

**Figure 5b**

**Figure 5c**

S60 — Mounting two electrodes around a power cord

S64 — Powering a device with an energy harvested from the power cord by the two electrodes

**Figure 6**

Europäisches
Patentamt

European
Patent Office

Office européen
des brevets

# EUROPEAN SEARCH REPORT

Application Number

EP 16 30 6627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 672 444 A1 (SERAM [FR]) 7 August 1992 (1992-08-07) | 1-6,15 | INV. G06K19/07 |
| Y | * page 1, line 1 - line 3 * | 9-14 | H02J50/05 |
| A | * page 4, line 24 - page 5, line 36 * * page 7, line 32 - page 8, line 17 * * figures 1,2,3 * | 7,8 | |
| | ----- | | |
| Y | GB 2 486 008 A (PERPETUUM LTD [GB]) 6 June 2012 (2012-06-06) * page 5, line 1 - line 8 * * figure 1 * | 9-13 | |
| | ----- | | |
| Y | US 2016/351994 A1 (LOUZIR ALI [FR] ET AL) 1 December 2016 (2016-12-01) * paragraph [0150] - paragraph [0151] * | 14 | |
| | ----- | | |
| A | WO 2015/039664 A1 (REMONI APS [DK]) 26 March 2015 (2015-03-26) * page 10, line 5 - line 22 * * figure 2 * | 1-14 | |
| | ----- | | TECHNICAL FIELDS SEARCHED (IPC) |
| | | | G06K H02J H01R H04N H02N |

The present search report has been drawn up for all claims

| Place of search | Date of completion of the search | Examiner |
|---|---|---|
| Munich | 18 May 2017 | Bhalodia, Anil |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 30 6627

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2017

| Patent document cited in search report | | | Publication date | Patent family member(s) | | | Publication date |
|---|---|---|---|---|---|---|---|
| FR 2672444 | A1 | | 07-08-1992 | NONE | | | |
| GB 2486008 | A | | 06-06-2012 | NONE | | | |
| US 2016351994 | A1 | | 01-12-2016 | EP | 3098609 | A1 | 30-11-2016 |
| | | | | US | 2016351994 | A1 | 01-12-2016 |
| WO 2015039664 | A1 | | 26-03-2015 | AU | 2014323761 | A1 | 07-04-2016 |
| | | | | CN | 105684295 | A | 15-06-2016 |
| | | | | DK | 178037 | B1 | 07-04-2015 |
| | | | | EP | 3047567 | A1 | 27-07-2016 |
| | | | | JP | 2016533699 | A | 27-10-2016 |
| | | | | SG | 11201602085Y | A | 28-04-2016 |
| | | | | US | 2016204655 | A1 | 14-07-2016 |
| | | | | WO | 2015039664 | A1 | 26-03-2015 |

EPO FORM P0459

For more details about this annex : see Official Journal of the European Patent Office, No. 12/82